# EUROPEAN PATENT SPECIFICATION

(11) **EP 3 159 239 B1**
(45) Date of publication and mention of the grant of the patent: **23.01.2019**
(21) Application number: 16194539.9
(22) Date of filing: 19.10.2016
(51) Int. Cl.: B62B 7/06, B62B 9/26, B62B 7/14

(54) **FOLDABLE CARRIAGE FOR BABY STROLLERS**
FALTBARER RAHMEN FÜR KINDERWÄGEN
CADRE PLIABLE POUR POUSSETTES

(30) Priority: 19.10.2015 IT UB20155203
(43) Date of publication of application: 26.04.2017
(73) Proprietor: PEG PEREGO S.p.A., 20862 Arcore (MB) (IT)
(72) Inventor: PEREGO, LUCIO, 20862 ARCORE (MB) (IT)
(74) Representative: Cosenza, Simona

(56) References cited:
- WO-A1-2007/053021
- WO-A1-2008/119547
- DE-A1- 3 709 712
- US-A- 4 239 259

## Description

This invention relates to a convertible carriage that is book-like foldable and usable as a push frame for baby strollers.

Baby strollers are known, wherein the push frame is of the "book-like" foldable type by rotation of the front legs and the rear legs relative to one another about a same or different axes parallel to the ground and orthogonal to the longitudinal development of the frame, the handle folding onto the front and rear legs by sliding or by rotation.

Each of the two front legs of these known frames is connected to the respective rear leg by means of one or more transmission bars, which favour the relative movement, without, however, stiffening or stabilising the structure in a substantial manner.

These strollers are often equipped with objects containing baskets that consist of a cover made of flexible material, generally a fabric made at least partially in the form of a net, said cover being suspended between the front and rear legs beneath the child seat.

Being suspended these baskets are generally confined between the front and rear legs of the stroller and, therefore, have limited dimensions.

These baskets are not suitable for carrying bulky or heavy objects such as, for example, shopping packets.

Moreover, families with children are often forced to use strollers of the known type inside supermarkets also along with the use of shopping trolleys, with obvious manoeuvring inconvenience and difficulties.

Often, in fact, supermarkets do not have a sufficient number of trolleys with seats for children and the safety regulations forbid the introduction or the resting of child seats and, in particular, child seats for cars in the shopping trolleys of the common type.

Documents WO2007/053021A1, DE3709712A1, US4,239,259 and WO2008/119547A1 disclose baby strollers of the folding type.

The aim of the present invention is to overcome the drawbacks of the prior art.

Within the context of this general aim, a particular aim is to provide a convertible carriage that is book-like foldable and usable as a push frame for baby strollers, the structure of which is particularly stable in particular in the open position.

Another aim of this invention is to make a convertible carriage that is book-like foldable and usable as a push frame for baby strollers, which is provided with a spacious and resistant basket and which has limited dimensions.

Another aim of this invention is to make a convertible carriage that is book-like foldable and usable as a push frame for baby strollers, which is very practical to use and easy to manoeuvre and, when used as a push frame for baby strollers, guarantees a high degree of safety for the child in any condition.

A further aim of this invention is to make a convertible carriage that is book-like foldable and usable as a push frame for baby strollers, which is particularly simple and functional and cost effective.

These and other aims according to the invention are achieved by making a convertible carriage that is book-like foldable and usable as a push frame for baby strollers as outlined in claim 1.

Further features are provided in the dependent claims.

The features and the advantages of a convertible carriage that is book-like foldable and usable as a push frame for baby strollers according to the present invention will become clearer from the following description, given as a non-limiting example, referred to the enclosed schematic drawings in which:
Figures 1 and 2 are, respectively, a front and a rear axonometric views of a carriage according to this invention in an open configuration;
Figures 3 and 6 are cross sections of a carriage according to this invention in an open configuration and in various possible configurations of use;
Figures 7 and 8 are cross-sections of a carriage according to the present invention in two successive steps from an open to a closed configuration;
Figures 9 and 10 are, respectively, a front and a rear axonometric views of a carriage according to the present invention in a closed configuration;
Figures 11 and 12 show an axonometric view, respectively exploded and in an assembled configuration, of a carriage according to the present invention used as a push frame of a baby stroller complete with a compartment in the form of a car baby seat.

With reference to the accompanying drawings, the numeral 10 indicates a convertible carriage that is book-like foldable and usable as a push frame for baby strollers.

It is noted that in this description reference is made to the carriage 10 considered resting on the ground and relative to a system of Cartesian axes XYZ, the plane XY of which coincides with the resting plane on the ground and is generically indicated as a horizontal plane.

Adjectives such as upper, lower, front or rear are to be intended as referring to a carriage 10 with respect to this system of Cartesian axes and in its usual configuration of use.

Moreover, it is noted that the adjectives first, second or third, as well as adjectives such as right or left, are only used for clarity of description and do not limit the scope of the invention.

The carriage 10 is of the convertible type, in the sense that it may adopt different use configurations both as a carriage in itself and as a push frame for baby strollers.

The carriage 10 is of the foldable type; in particular it is of the book-like foldable type and takes up an open configuration for use and a closed configuration when not in use.

The carriage 10 comprises:
- a pair of front legs 11, respectively a right front leg and a left front leg, which are parallel to one another, spaced laterally and associated with one another to constitute a unique body and which are equipped with at least one front wheel 12 resting on the ground,
- a pair of rear legs 13, respectively a right rear leg and a left rear leg, which are parallel to one another, spaced laterally and associated with one another to constitute a unique body and which are equipped with at least one rear wheel 14 resting on the ground, and
- a pair of operating shafts 15, respectively a right operating shaft and a left operating shaft, which are parallel to one another, spaced laterally and associated with one another to constitute a unique body and which are equipped with at least one handle 16.

The front legs 11 are coupled with one another close to their lower end 11a, that is, the end to which a respective front wheel 12 is coupled, by means of a crosspiece 17.

Each of the two front legs 11 preferably has the shape substantially of an upturned "L", the two sections of which form together an angle greater than 90° and of which the section of greater length forms the actual front leg and the section of shorter length extends towards the rear legs 13 and, when the carriage 10 is in its open configuration, is parallel to the ground on which the carriage rests.

The rear legs 13 are coupled with one another close to their lower end 13a, that is, the end to which a respective rear wheel 14 is coupled, by means of a crosspiece 18.

Each of the two front legs 11 and the two rear legs 13 can be made as a unique body or be formed by several members assembled together to form a unique body.

The rear legs 13 and the front legs 11 are articulated in a rotatable manner about a common first hinge axis or about two different first hinge axes defined in an articulation joint (not shown) and parallel to the ground and orthogonal to the movement direction of the carriage 10, so as to be able to rotate one relative to the other between an open configuration, wherein they are spaced from one other, and a closed configuration, wherein they are side by side.

Preferably, the rear legs 13 and the front legs 11 are articulated together in a rotatable manner about a common first hinge axis A parallel to the ground on which the carriage 10 rests and orthogonal to the movement direction B of the carriage 10, where the expression "movement direction B" means the direction parallel to the longitudinal axis of development of the carriage 10 as indicated in the enclosed drawings.

The pair of rear legs 13 and the pair of front legs 11 rotate relative to one another about the first hinge axis A as unique bodies.

Advantageously, the first hinge axis A is defined at the upper ends 11b and 13b of the front legs 11 and of the rear legs 13. With reference to the embodiment shown in the enclosed drawings, the first hinge axis A is defined at the upper end 13b of the rear legs and at the upper end 11b of the front legs 11 that is defined by the end of the shortest section of their L-shape.

The operating shafts 15 can, advantageously, be of the telescopic type.

The operating shafts 15 each have a lower end 15a and an upper end 15b; they are connected together at their upper end 15b by a crosspiece 19, at which the handle 16 is defined.

The operating shafts 15 can be coupled to the front legs 11 and to the rear legs 13 in a rotatable manner about a hinge axis parallel or coincident with the first hinge axis A so as to fold either on the front legs 11 or on the rear legs 13, with a forward and backward rotation, respectively, for the carriage 10 to pass from an open configuration to a closed configuration, the inverse passage taking place with a rotation of the operating shafts 15 in the opposite direction.

Alternately and preferably, the operating shafts 15 are coupled to the front legs 11 in a movable manner with a sliding movement component in a direction parallel to the longitudinal development direction of the front legs 11, so as to pass from a position of use, wherein they extend upwards and rearwards with respect to front legs 11, to a rest position, wherein they are retracted towards the front legs 11 and placed side by side with the latter, and vice versa.

Preferably, the operating shafts 15 are parallel to the front legs 11 and are coupled to the front legs 11 in an axially slidable manner along a direction parallel to the longitudinal development of the front legs 11.

Preferably, the operating shafts 15 are coupled to the shortest section of the "L" shape of the front legs 11.

As it is noted in the enclosed drawings, the two operating shafts 15 comprise an end section which terminates at their lower end 15a and which, when they are in their position of use, is positioned side by side the respective front leg 11 and, with reference to the embodiment shown in the enclosed drawings, rearly with respect to the front leg 11 and below the shortest section of the "L" shape of the front legs 11.

As it is immediately comprehensible to the skilled person, between the operating shafts 15 and the front legs 11 locking means of the removable type are provided for locking the operating shafts 15 in their position of use; these locking means, which, for example, can be of the locking bolt type, are advantageously controlled by pushbuttons or levers 20 located at the handle 16.

According to a first aspect the carriage 10 comprises a pair of plate-like bodies, respectively a first plate-like body 22 and a second plate-like body 23, which are interposed between the pair of front legs 11 and the pair of rear legs 13 to form a compass.

The first plate-like body 22 and the second plate-like body 23 are articulated to one another, at one end thereof, about a second hinge axis E and they are articulated, at their opposite ends, respectively to the pair of front legs 11 and to the pair of rear legs 13 respectively about a third hinge axis F and a fourth hinge axis G.

More in detail, the first plate-like body 22 has the front end articulated in a hinge-like manner to a portion of the front legs 11 close to lower end 11a thereof. Advantageously, the first plate-like body 22 has the front end articulated in a hinge-like manner to the crosspiece 17 that connects the two front legs 11; therefore, the crosspiece 17 defines the third hinge axis F.

The second plate-like body 23 has the rear end articulated in a hinge-like manner to a portion of the rear legs 13 close to lower end 13a thereof. Advantageously, the second plate-like body 23 has the rear end articulated in a hinge-like manner to the crosspiece 18 that connects the two rear legs 13; therefore, the crosspiece 18 defines the fourth hinge axis G.

The rear end of the first plate-like body 22 and the front end of the second plate-like body 23 are articulated to one another about a pin that defines the second hinge axis E.

As it will be clearer from the following description, when the carriage 10 is in its open configuration the first plate-like body 22 and the second plate-like body 23 act as a supporting plan for supporting thereon the bottom 29a of a basket 29 foldable in a bellows manner, said basket being interposed between the front legs 11 and the rear legs 13 and having the upper edge associated with the front legs 11 and the rear legs 13.

Advantageously, the distance between the second hinge axis E and the third hinge axis F is different from, preferably greater than, the distance between the second hinge axis E and the fourth hinge axis G. In practice, the length of the first plate-like body 22 considered along the longitudinal development of the carriage 10 is greater than the length of the second plate-like body 23.

The first plate-like body 22 and the second plate-like body 23 can advantageously have lightened portions and/or reinforced portions, for example, by ribs. When the carriage 10 is in its open configuration, the first plate-like body 22 and the second plate-like body 23 are substantially coplanar to one another and parallel to the ground.

It is noted that the expression "plate-like body" means a body having a substantially planar extension and the width of which is, at least at one of its portions, almost equal to the distance between the front legs 11 or rear legs 13.

Also in this case it is noted that the second hinge axis E, the third hinge axis F and the fourth hinge axis G are parallel to the ground and orthogonal to the movement direction B of the carriage 10; moreover, they are different from one another and also different from the first hinge axis A.

In a preferred embodiment, the carriage 10 also comprises a pair of shaft-like bodies, respectively a first shaft-like body 24 and a second shaft-like body 25, which form a quadrilateral articulated with the pair formed by the first plate-like body 22 and the second plate-like body 23.

The first shaft-like body 24 and the second shaft-like body 25 are interposed between the pair of front legs 11 and the pair of rear legs 13, are articulated to one another, at an end, about a fifth hinge axis H and are articulated, at the opposite end, respectively to the pair of front legs 11 (or to the first plate-like body 22 that is articulated to the front legs 11) and to the pair of rear legs 13 (or to the second plate-like body 23 that is articulated to the rear legs 13) respectively about a sixth hinge axis I and a seventh hinge axis L, which are coincident or parallel respectively with the third hinge axis F and the fourth hinge axis G.

More in detail, when the carriage 10 is in its open configuration, the first shaft-like body 24 and the second shaft-like body 25 are substantially coplanar to one another and they extend below the first plate-like body 22 and the second plate-like body 23.

The first shaft-like body 24 has the front end articulated in a hinge-like manner to the pair of front legs 11 in a rotatable manner about the sixth hinge axis I that, advantageously, coincides with the third hinge axis F; the front end of the first plate-like body 22 and of the first shaft-like body 24 are therefore both articulated about the crosspiece 17. The second shaft-like body 25 has the rear end articulated in a hinge-like manner to the second plate-like body 23 about a pin that defines the seventh hinge axis L.

The rear end of the first shaft-like body 24 and the front end of the second shaft-like body 25 are articulated to one another about a pin that defines the fifth hinge axis H.

Advantageously, one of the two plate-like bodies or one of the two shaft-like bodies comprises at one of its ends an appendage that, when the carriage 10 is in the closed configuration, acts as a strut or pedestal for resting on the ground.

Preferably, the first shaft-like body 24 comprises such an appendage 26 that is defined at the end of the first shaft-like body 24 articulated to the second shaft-like body 25.

The first shaft-like body 24 and the second shaft-like body 25 can have various shapes advantageously lightened and/or reinforced for instance by ribs.

It is also noted that the expression "substantially coplanar " referred to the arrangement of the plate-like bodies and the shaft-like bodies when the carriage 10 is in its open configuration means coplanar with the exception of shifts of the order of a few inclination degrees as it is shown in the enclosed drawings due to the thickness, the shape and the overall size of them and of their cylindrical articulations.

The pair of plate-like bodies and, if present, the pair of shaft-like bodies stiffen and stabilise the structure of the carriage 10 when it is in its open configuration and favour the relative movement of the front legs 11 and of the rear legs 13 in the passage of the carriage 10 from its open to its closed configurations and vice versa.

The carriage 10 also comprises a pair of levers 21, respectively a right lever and a left lever, each of which has a front end 21a and a rear end 21b.

The front end 21a of the two levers 21, right and left, is hinged to the respective operating shaft 15, right and left, about a common eighth hinge axis C.

The rear end 21b of the two levers 21, right and left, is hinged to the respective rear leg 13, right and left, about a common ninth hinge axis D.

The eighth hinge axis C and the ninth hinge axis D are parallel to one another and different; moreover, they are parallel different from the first hinge axis A and from the remaining hinge axes mentioned above.

Preferably, the eighth hinge axis C is defined at the lower ends 15a of the operating shafts 15 and the ninth hinge axis D is defined at a substantially median point of the longitudinal development of the rear legs 13.

The shafts 21 favour the relative movement of the front legs 11 and the rear legs 13 in the passage of the carriage 10 from its open to its closed configurations and vice versa.

According to a further aspect at least one of a front portion of the upper edge and a rear portion of the upper edge of the basket 29 is constrained to a respective supporting body that is articulated respectively to the pair of front legs 11 or to the pair of rear legs 13 in a movable manner between a raised position, wherein it projects respectively from the pair of front legs 11 or from the pair of rear legs 13, and a lowered position, wherein it is side by side and substantially coplanar respectively with the pair of front legs 11 or the pair of rear legs 13.

In more detail, the carriage 10 comprises a pair of such supporting bodies that are advantageously constituted by arch tubular bodies, respectively a front arch tubular body 27 and a rear arch tubular body 28 which have the respective ends articulated in a hinge-like manner respectively to the pair of front legs 11 and to the pair of rear legs 13 respectively about a tenth hinge axis M and an eleventh hinge axis N, said axes being parallel to and different from all of the hinge axes, starting from the first hinge axis A to the ninth hinge axis L, as defined above.

The first arch tubular body 27 and the second arch tubular body 28 advantageously have the shape of a "U", a "C" or the like and each define a portion of the upper edge of a basket 29 foldable in a bellows manner, which is only schematically shown in the enclosed drawings by the dashed line.

The first arch tubular body 27 is movable between a raised position, wherein it projects from and in front of the pair of front legs 11 to support a front end of the basket 29, and a lowered position, wherein it is side by side and substantially coplanar with the pair of front legs 11.

The second arch tubular body 28 is movable between a raised position, wherein it projects from and rearwards the pair of rear legs 13 to support a rear end of the basket 29, and a lowered position, wherein it is side by side and substantially coplanar with the pair of rear legs 13.

Also in this case, the expression "substantially coplanar" referred to the front tubular body 27 and to the rear tubular body 28 in their lowered position respectively on the front legs 11 and on the rear legs 13 means coplanar with the exception of shifts of a few degrees due to dimensions and articulations.

The rotation of the first arch tubular body 27 about the respective tenth hinge axis M is advantageously independent of the rotation of the second arch body 28 about the respective eleventh hinge axis N, so that the front and rear ends of the basket 29 can be folded independently of one another.

Locking means are also present for the removable locking of the first arch tubular body 27 and the second arch tubular body 28 in their raised and lowered positions, which are not described in detail being of a type immediately comprehensible to the skilled person and which, for example, can be of the interlocking or snap type or the like.

When the carriage 10 is in its open configuration, the first plate-like body 22 and the second plate-like body 23 form an element for supporting the bottom 29a of the basket 29.

The basket 29 comprises in particular a flexible cover that defines its walls and the bottom. This cover has an upper perimetral edge coupled, advantageously in a removable manner, to the first arch tubular body 27 and to the second arch tubular body 28. Said cover has bottom portions that are coupled, advantageously in a removable manner, to the pair of front legs 11 and to the pair of rear legs 13 and preferably to the respective crosspiece 17 and 18.

In a preferred embodiment, the carriage 10 also comprises coupling members 30 for the removable coupling with a baby containment compartment 100 that is equipped with complementary coupling members.

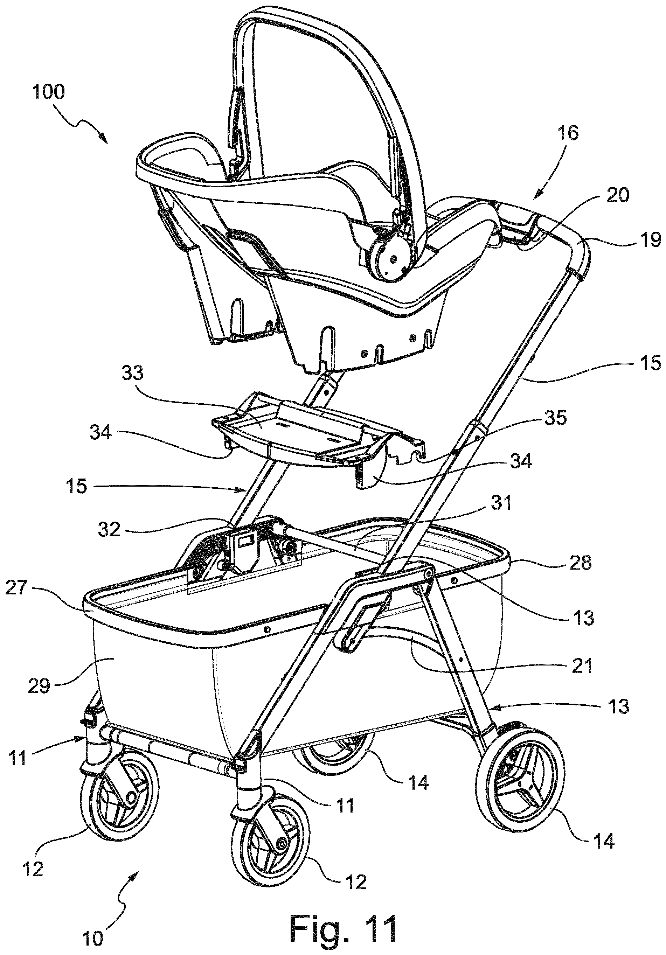

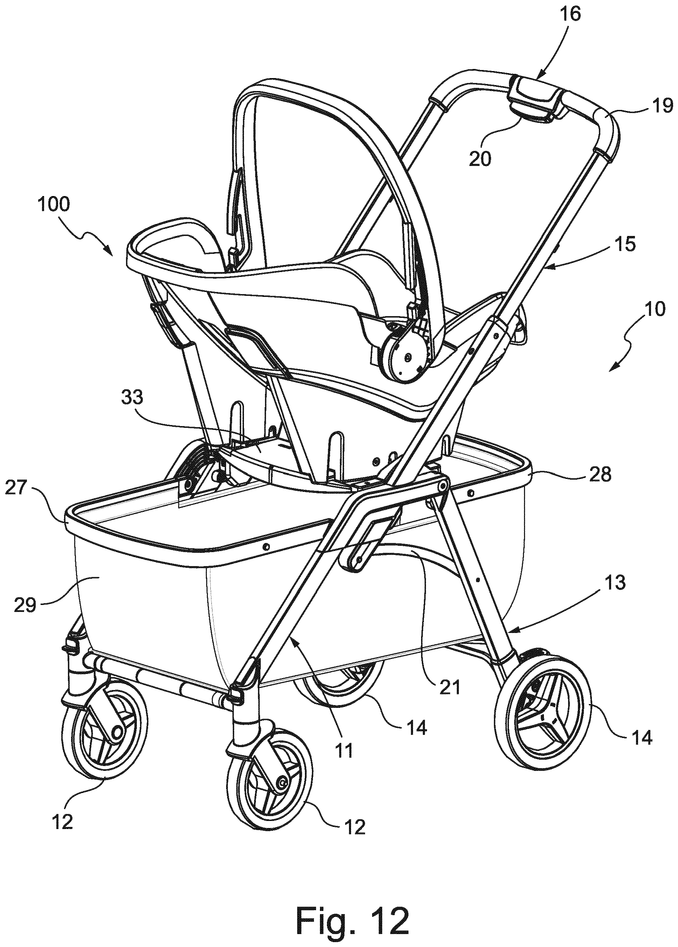

Advantageously, the compartment 100 consists of a shuttle, a baby seat or, preferably, a car baby seat as shown in Figures 11 and 12.

The coupling members 30 can have various configurations and the carriage 10 that can comprise coupling members of different types.

The coupling members 30 can, for example, comprise a transversal shaft or bar 31, which connects the front legs 11 or rear legs 13 and with which bracket or hooking elements can be coupled, said elements being provided on the compartment; it is noted that such a bar 31 is defined close to the first hinge axis A and, advantageously, coincident with it and also acts as a stiffening element for the carriage 10.

The coupling members 30 can comprise male or female elements 32 defined at the front legs 11 or rear legs 13 and advantageously at the upper end 11b and 13b of them for the snap or interlocking coupling with corresponding male of female elements provided on the compartment.

The coupling members 30 can comprise a support plate 33 that extends between the front legs 11 or rear legs 13 and that is equipped with coupling elements for the mutual coupling with matching coupling elements provided on the compartment. The plate 33 can be advantageously coupled to the carriage 10 in a removable manner by means of male elements 34 that are integral with it and insertable into female elements 32 and by means of a bracket 35 that can be coupled on the bar 31.

Another object of the present invention is a baby stroller comprising a push frame to which a baby compartment 100 is coupled in a removable manner, wherein the push frame comprises a carriage 10 as shown in Figures 11 and 12.

The operation of the carriage 10 is immediately comprehensible to the skilled person from the above description and the enclosed drawings.

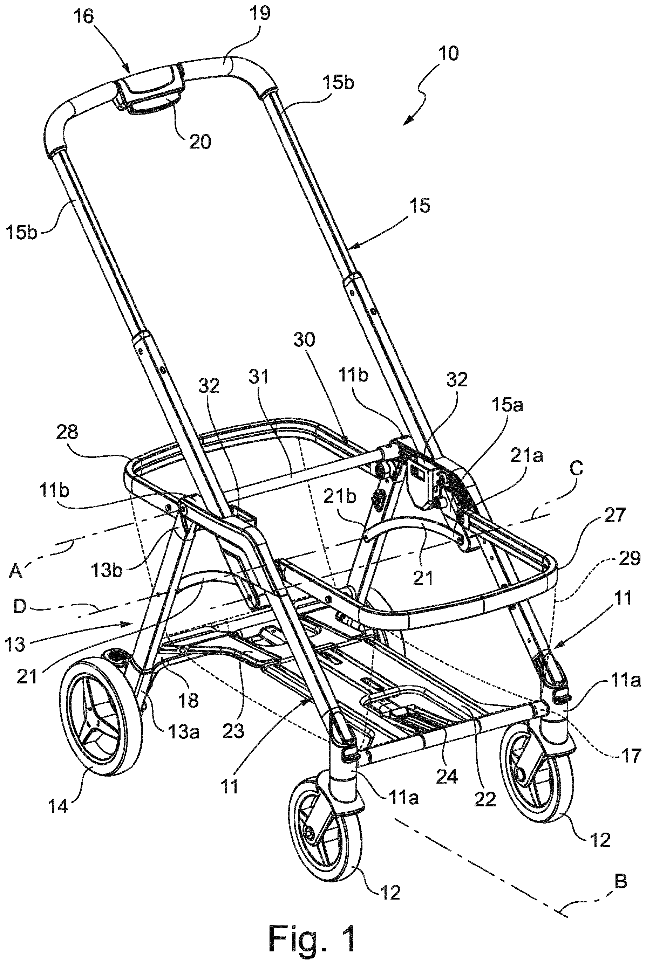

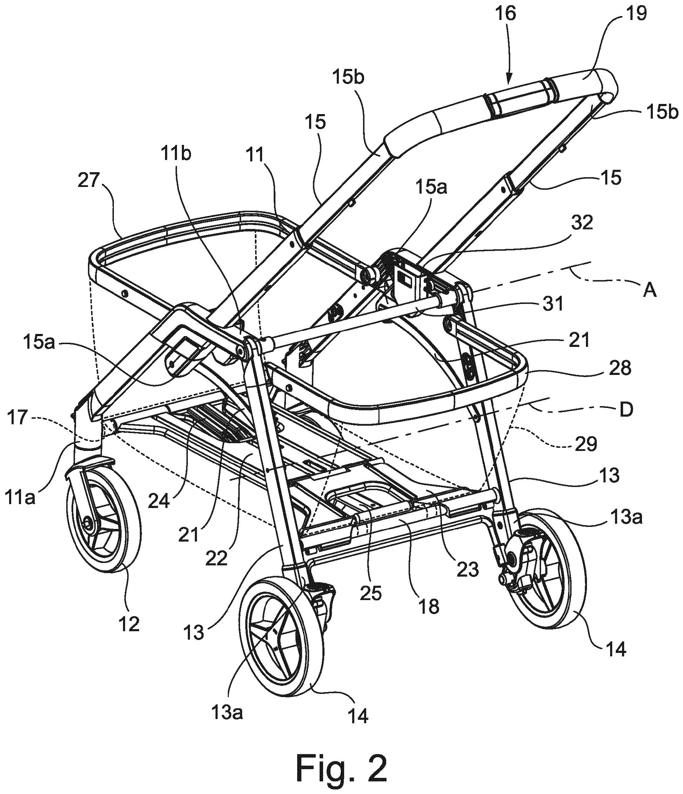

The carriage 10 takes up an open configuration (Figures 1 to 6), wherein the pair of front legs 11 and the pair of rear legs 13 are spaced apart from one another, the plate-like bodies 22 and 23 extend between them and are substantially coplanar to one another and the operating shafts 15 are in their position of use wherein they extend upwards and rearly with respect to the pair of front legs 11.

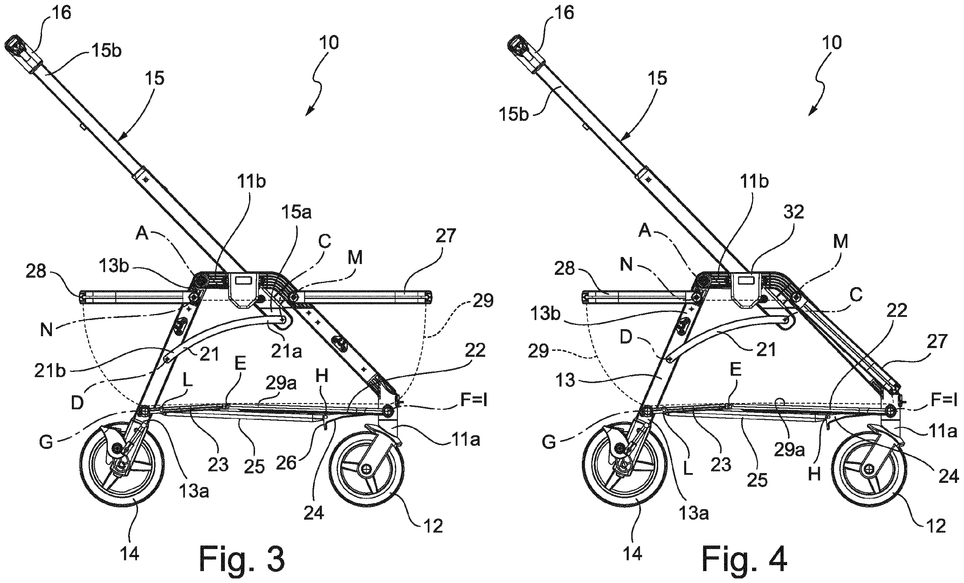

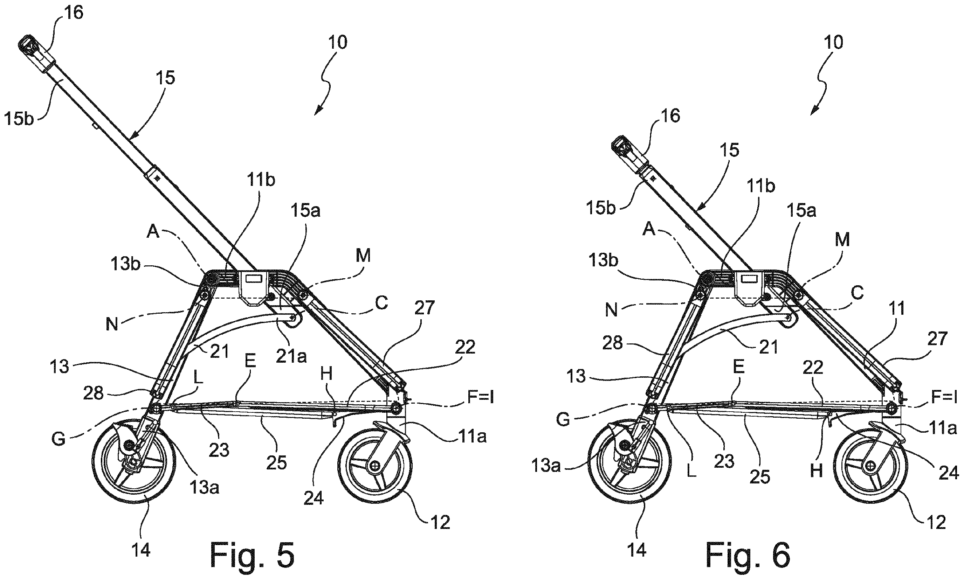

When the carriage 10 is in its open configuration, the basket 29 can take up various configurations as shown in Figures 3 to 6 depending on the position taken up by the first arch tubular body 27 and by the second arch tubular body 28. In Figure 3 both the arch tubular bodies 27 and 28 are locked in their raised position and the basket 29 is in its configuration of maximum containment capacity. In Figure 4 the first arch tubular body 27 is locked in its lowered position thereby making the inside of the basket 29 accessible from the front as well as, as usual, from above. In Figure 5 both the first arch tubular body 27 and the second arch tubular body 28 are locked in their lowered position, the basket 29 being open at the front and at the rear. Figure 6 shows the carriage 10 in an open configuration like that of Figure 4 with the operating shafts 15 telescopically retracted.

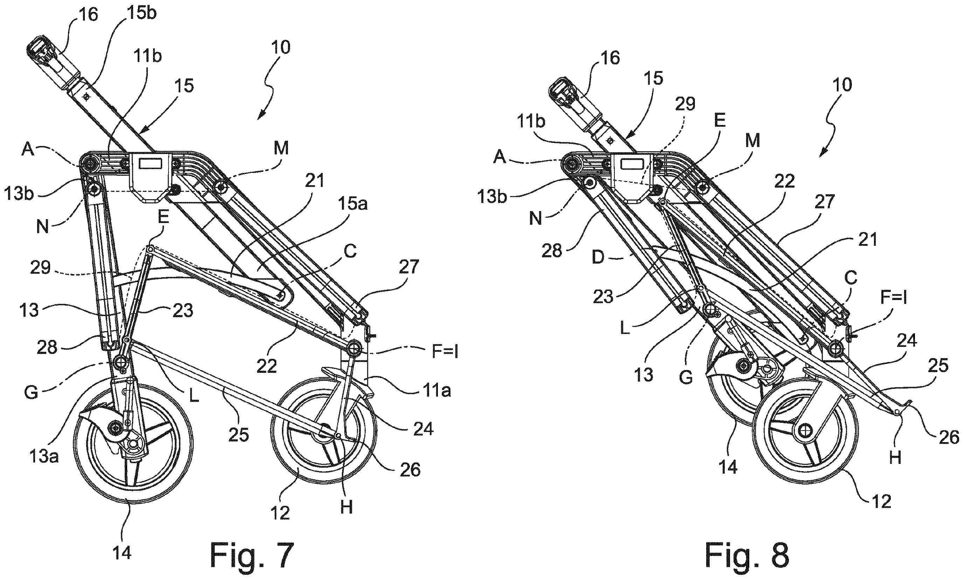

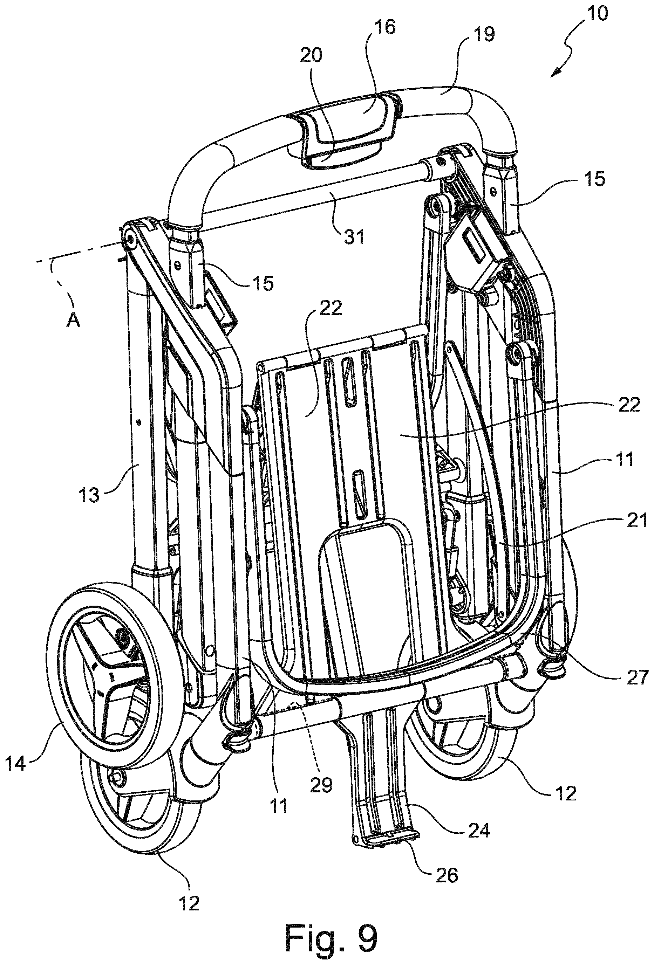

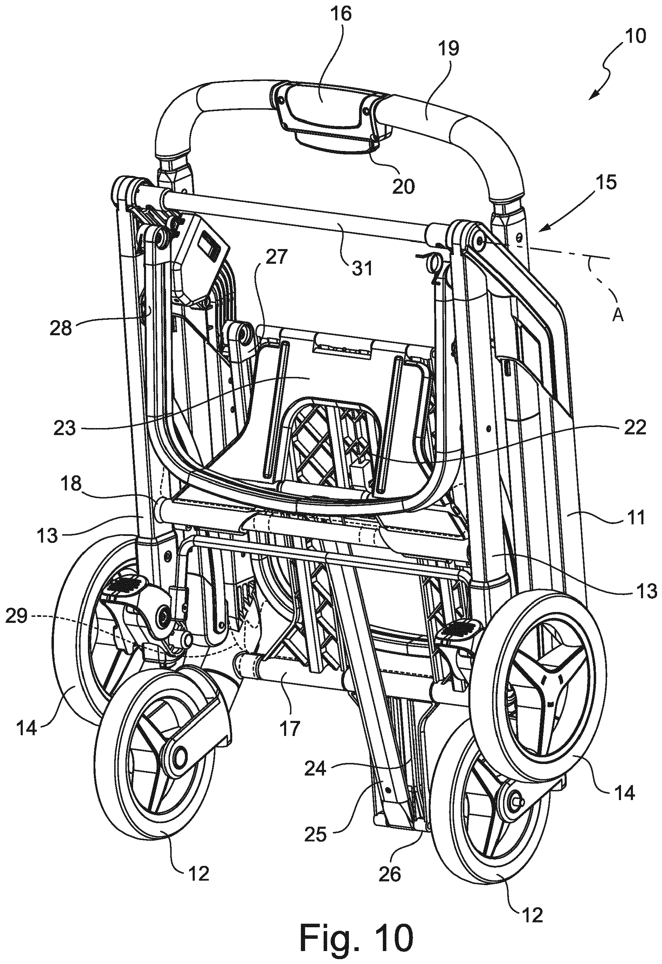

Figures 7 to 10 show the closing steps of the carriage 10 advantageously carried out by a user by a single hand.

In order to close the carriage 10 it is firstly necessary to move the front arch tubular body 27 and the rear arch tubular body 28 to their respective lowered position wherein they are side by side and substantially coplanar respectively to the pair of front legs 11 and to the pair of rear legs 13.

By gripping the handle 16 and operating the lever 20 the locking means of the operating shafts 15 are released and by exerting on them an axial pushing action downwards they slide axially parallel to the longitudinal extension of the front legs 11. As the operating shafts 15 gradually approach the front legs 11, the shafts 21 drag the rear legs 13 towards the front legs 11. This movement is favoured by the compass-like closure of the first plate-like body 22 and of the second plate-like body 23 and, if present, of the first shaft-like body 24 and of the second shaft-like body 25, which approach to one another.

The appendage 26 advantageously acts as a support on the ground.

The carriage according to the present invention has the advantage of being foldable in a simple and quick manner with few manoeuvres and with the use of a single hand.

The carriage according to the present invention has the advantage of having a particularly simple and light structure and of having extremely limited dimensions especially when it is in the closed configuration, so as to be easily transported and handled.

The carriage according to the present invention has the advantage of comprising a spacious basket adapted to contain and support even heavy loads; the bottom of the basket is in fact supported by the two plate-like bodies which are articulated in a compass-like manner between the front and rear legs and which act as elements for resting and supporting the basket.

The carriage according to the present invention has the advantage of comprising a basket that can take up various configurations depending on the transport or containment needs.

The carriage according to the present invention has the advantage of being adapted to be used as a push frame for baby strollers and, in particular, for the strollers the seat of which consists of a car baby seat.

It is noted that the pair of plate-like bodies articulated between the front legs and the rear legs close to their lower ends and in particular at their connecting crosspiece - as well as any pair of the shaft-like bodies that form with them an articulated quadrilateral - can be adopted in itself (i.e. even regardless of the presence of the basket) on push frames of baby strollers of the book-like foldable type of the known type, the handle shafts of which can be articulated to the front or rear legs by means of a cylindrical hinge or by means of a slidable coupling.

The convertible carriage that is book-like foldable and usable as a push frame for baby strollers as described can be modified and adapted in several manner all falling into the scope of the present invention. Moreover, all of the details can be replaced by technically equivalent elements. In practice, the material used, as well as the dimensions, can be any depending on the technical needs.

## Claims

1. Convertible carriage (10) that is book-like foldable and that is usable as a push frame for baby strollers comprising:
- a pair of front legs (11), respectively a front right leg and a front left leg that are parallel to one another, laterally spaced and associated with one another in order to constitute a unique body and that are provided with at least one front wheel (12) for resting on the ground,
- a pair of rear legs (13), respectively a rear right leg and a rear left leg which are parallel to one another, laterally spaced and associated with each other in order to constitute a unique body and that are provided with at least one rear wheel (14) for resting on the ground, and
- a pair of operating shafts (15), respectively a right operating shaft and a left operating shaft that are parallel to one another, laterally spaced and associated with one another in order to constitute a unique body and that are provided with at least one handle (16),
- wherein said pair of rear legs (13) and said pair of front legs (11) are articulated in a rotatable manner around a common first hinge axis (A) or around an own first distinct hinge axis (A) defined in an articulation joint, wherein said first hinge axis (A) is parallel to the supporting ground of said carriage and orthogonal to the displacement direction (B) of said carriage,
**characterized in that** it comprises
- a pair of plate-like bodies (22, 23) that are interposed between said pair of front legs (11) and said pair of rear legs (13), are articulated to one another, at one end, around a second hinge axis (E) and are articulated, at the opposite end, to said pair of front legs (11) and to said pair of rear legs (13) respectively around a third hinge axis (F) and a fourth hinge axis (G), wherein said hinge axes are parallel to one another and distinct and wherein said carriage takes up an open configuration, in which said pair of front legs (11) and said pair of rear legs (13) are spaced apart from one another, said plate-like bodies (22, 23) extend between them and are substantially coplanar to one another and said operating shafts (15) extend upwardly and rearwardly of said pair of front legs (11), and a closed configuration, in which said pair of front legs (11), said pair of rear legs (13) and said pair of operating shafts (15) are close to one another and at least partially overlapped and said plate-like bodies (22, 23) are juxtaposed to one another and at least partially overlapped and interposed between said pair of front legs and said pair of rear legs, wherein when said carriage (10) is in said open configuration, said pair of plate-like bodies (22, 23) acts as a supporting plane that supports the bottom (29a) of a bellows-like foldable basket (29) that is interposed between said pair of front legs (11) and said pair of rear legs (13) and the upper edge of which is associated with said pair of front legs and with said pair of rear legs.

2. Carriage (10) according to claim 1, **characterized in that** at least one of the front portion of said upper edge and a rear portion of said upper edge is constrained to a respective supporting body that is articulated to said pair of front legs (11) or to said pair of rear legs (13) respectively in a movable manner between a raised position, in which it protrudes from said pair of front legs (11) or from said pair of rear legs (13) respectively, and a lowered position, in which it is close and substantially coplanar to said pair of front legs (11) or to said pair of rear legs (13) respectively.

3. Carriage (10) according to claim 1 or 2, **characterized in that** the distance between said second hinge axis (E) and said third hinge axis (F) is different from the distance between said second hinge axis (E) and said fourth hinge axis (G).

4. Carriage (10) according to claim 3, **characterized in that** the distance between said second hinge axis (E) and said third hinge axis (F) is greater than the distance between said second hinge axis (E) and said fourth hinge axis (G).

5. Carriage (10) according to one or more of the preceding claims, **characterized in that** said opposite ends of said plate-like bodies (22, 23) are articulated to said pair of front legs (11) and to said pair of rear legs (13) respectively in proximity of their end coupled to said at least one front wheel (12) and to said at least one rear wheel (13) respectively.

6. Carriage (10) according to one or more of the preceding claims, **characterized in that** said opposite ends of said plate-like bodies (22, 23) are articulated to said pair of front legs (11) and to said pair of rear legs (13) respectively at one respective connection crosspiece (17, 18) of said two front legs (11) and of said two rear legs (13).

7. Carriage (10) according to one or more of the preceding claims, **characterized in that** it comprises a pair of shaft-like bodies (24, 25) that are interposed between said pair of front legs (11) and said pair of rear legs (13), are articulated to one another, at one end, around a fifth hinge axis (H) and are articulated, at the opposite end, respectively to said pair of front legs (11), or to the plate-like body (22) articulated to said pair of front legs and to said pair of rear legs (13), or to the plate-like body (23) articulated to said pair of rear legs, around a sixth hinge axis (I) and a seventh hinge axis (L), respectively, coinciding with or parallel to said third hinge axis (F) and to said fourth hinge axis (G) respectively, wherein said pair of plate-like bodies (22, 23) and said pair of shaft-like bodies (24, 25) form an articulated quadrilateral.

8. Carriage (10) according to claim 7, **characterized in that** one of said plate-like bodies (22, 23) or of said shaft-like bodies (24, 25) comprises at one of its ends an appendage (26) that, when said carriage is in a closed configuration, acts as a strut for resting on the ground.

9. Carriage (10) according to one or more of claims 2 to 8, **characterized in that** it comprises a pair of arch tubular bodies (27, 28), a front arch tubular body (27) and a rear arch tubular body (28) respectively, which constitute said supporting bodies and have the respective ends hinge articulated to said pair of front legs (11) and to said pair of rear legs (13) respectively around a tenth hinge axis (M) and an eleventh hinge axis (N) parallel to and distinct from said hinge axes respectively, wherein each of said arch tubular bodies (27, 28) defines the upper edge of a respective end of said bellows-like foldable basket (29) and is movable between a raised position, in which it protrudes from said pair of front legs (11) and from said pair of rear legs (13) respectively, and a lowered position, in which it is close to and substantially coplanar to said pair of front legs (11) and to said pair of rear legs (13) respectively, wherein the bottom (29a) of said basket (29) rests on said pair of plate-like bodies (22, 23) when said carriage is in its open configuration.

10. Carriage (10) according to claim 9, **characterized in that** said basket (29) comprises a flexible cover that defines the walls and the bottom thereof and that has an upper perimetral edge coupled to said arch tubular bodies (27, 28).

11. Carriage (10) according to claim 10, **characterized in that** said cover has bottom portions (29a) coupled to said pair of front legs (11) and to said pair of rear legs (13) close to their lower end (11a, 13a).

12. Carriage (10) according to one or more of the preceding claims, **characterized in that** said pair of operating shafts (15) is coupled to said pair of front legs (11) in a movable manner with a component of sliding movement in a direction parallel to the direction of longitudinal development of said front legs (11), and **in that** it comprises
- a pair of levers (21), a right lever and a left lever respectively, which have an end (21a) hinged to the respective right operating shaft (15) and left operating shaft (15) around a common eighth hinge axis (C) and the opposite end (21b) hinged to the respective right rear leg (13) and left rear leg (13) around a common ninth hinge axis (D).

13. Carriage (10) according to one or more of the preceding claims, **characterized in that** it comprises coupling members (30) for the removable coupling with a baby containment compartment.

14. Carriage (10) according to claim 13, **characterized in that** said coupling members comprise at least one of: a transverse rod (31) that extends between said rear legs or between said front legs close to said first hinge axis (A) for coupling with hooking or coupling elements provided on said compartment, female or male elements (32) defined at said front or rear legs for snap or interlocking coupling with corresponding male or female elements provided on said compartment, a support plate (33) that extends between said front or rear legs and that is provided with coupling elements for mutual coupling with complementary coupling elements provided on said compartment.

15. Baby stroller comprising a push frame to which a baby compartment is coupled in a removable manner, **characterized in that** said push frame consists of a carriage (10) according to one or more of the preceding claims.

## Patentansprüche

1. Umwandelbarer, buchartig faltbarer, als Schubrahmen für Kinderwägen verwendbarer Rahmen (10), umfassend:
- ein Paar Vorderbeine (11), jeweils ein rechtes Vorderbein und ein linkes Vorderbein, die zueinander parallel, seitlich beabstandet und miteinander verbunden sind, um einen einzigen Körper zu bilden, und mit wenigstens einem Vorderrad (12) zum Abstützen auf dem Boden versehen sind,
- ein Paar Hinterbeine (13), jeweils ein rechtes Hinterbein und ein linkes Hinterbein, die zueinander parallel, seitlich beabstandet und miteinander verbunden sind, um einen einzigen Körper zu bilden, und mit wenigstens einem Hinterrad (14) zum Abstützen auf dem Boden versehen sind, und
- ein Paar Bewegungsachsen (15), jeweils eine rechte Bewegungsachse und eine linke Bewegungsachse, die zueinander parallel, seitlich beabstandet und miteinander verbunden sind, um einen einzigen Körper zu bilden, und mit wenigstens einem Griff (16) versehen sind,
- wobei das Paar Hinterbeine (13) und das Paar Vorderbeine (11) um eine erste gemeinsame Scharnierachse (A) oder eine eigene, erste, getrennte Scharnierachse (A) drehbar angelenkt sind, die in einer Gelenkverbindung definiert ist, wobei die erste Scharnierachse (A) sich parallel zum Stützboden des Rahmens und rechtwinklig zur Verschiebungsrichtung (B) des Kinderwagens befindet,
**dadurch gekennzeichnet, dass** er Folgendes umfasst:
- ein Paar plattenartige Körper (22, 23), die zwischen dem Paar Vorderbeinen (11) und dem Paar Hinterbeinen (13) eingefügt, an einem Ende um eine zweite Scharnierachse (E) aneinander angelenkt und am gegenüberliegenden Ende an dem Paar Vorderbeine (11) und an dem Paar Hinterbeinen (13) jeweils um eine dritte Scharnierachse (F) und eine vierte Scharnierachse (G) angelenkt sind, wobei die Scharnierachsen zueinander parallel und getrennt sind und wobei der Rahmen einen offenen Zustand annimmt, in dem das Paar Vorderbeine (11) und das Paar Hinterbeine (13) voneinander beabstandet sind, wobei die plattenartigen Körper (22, 23) sich zwischen ihnen erstrecken und im Wesentlichen zueinander koplanar sind und die Bewegungsachsen (15) sich aufwärts und rückwärts des Paares von Vorderbeinen (11) erstrecken, und einen geschlossenen Zustand, in dem das Paar Vorderbeine (11), das Paar Hinterbeine (13) und das Paar Bewegungsachsen (15) nahe beieinander sind und sich wenigstens teilweise überlappen und die plattenartigen Körper (22, 23) nebeneinander angeordnet sind und sich wenigstens teilweise überlappen und zwischen dem Paar Vorderbeinen und dem Paar Hinterbeinen angeordnet sind, wobei, wenn der Rahmen (10) sich im offenen Zustand befindet, das Paar plattenartiger Körper (22, 23) als Stützebene zum Abstützen des Bodens (29a) eines faltenbalgartig zusammenklappbaren Korbes (29) fungiert, der zwischen dem Paar Vorderbeinen (11) und dem Paar Hinterbeinen (13) eingefügt ist und dessen oberer Rand mit dem Paar Vorderbeinen und dem Paar Hinterbeinen verbunden ist.

2. Rahmen (10) nach Anspruch 1, **dadurch gekennzeichnet, dass** wenigstens entweder der vordere Abschnitt des oberen Randes oder ein hinterer Abschnitt des oberen Randes an einem jeweiligen Stützkörper festgelegt ist, der jeweils an dem Paar Vorderbeinen (11) oder an dem Paar Hinterbeinen (13) zwischen einer angehobenen Position, in der er jeweils aus dem Paar Vorderbeinen (11) oder aus dem Paar Hinterbeinen (13) auskragt, und einer abgesenkten Position, in der er nahe bei und im Wesentlichen koplanar jeweils zu dem Paar Vorderbeinen (11) oder zu dem Paar Hinterbeinen (13) beweglich ist.

3. Rahmen (10) nach Anspruch 1 oder 2, **dadurch gekennzeichnet, dass** der Abstand zwischen der zweiten Scharnierachse (E) und der dritten Scharnierachse (F) verschieden von dem Abstand zwischen der zweiten Scharnierachse (E) und der vierten Scharnierachse (G) ist.

4. Rahmen (10) nach Anspruch 3, **dadurch gekennzeichnet, dass** der Abstand zwischen der zweiten Scharnierachse (E) und der dritten Scharnierachse (F) größer als der Abstand zwischen der zweiten Scharnierachse (E) und der vierten Scharnierachse (G) ist.

5. Rahmen (10) nach einem oder mehreren der vorstehenden Ansprüche, **dadurch gekennzeichnet, dass** die gegenüberliegenden Enden der plattenartigen Körper (22, 23) an dem Paar Vorderbeinen (11) und an dem Paar Hinterbeinen (13) jeweils in der Nähe ihrer Enden angelenkt sind, die jeweils an dem wenigstens einen Vorderrad (12) und an dem wenigstens einen Hinterrad (13) angekoppelt sind.

6. Rahmen (10) nach einem oder mehreren der vorstehenden Ansprüche, **dadurch gekennzeichnet, dass** die gegenüberliegenden Enden der plattenartigen Körper (22, 23) an dem Paar Vorderbeinen (11) und an dem Paar Hinterbeinen (13) jeweils an einem jeweiligen Verbindungskreuzstück (17, 18) der beiden Vorderbeine (11) und der beiden Hinterbeine (13) angelenkt sind.

7. Rahmen (10) nach einem oder mehreren der vorstehenden Ansprüche, **dadurch gekennzeichnet, dass** er ein Paar wellenartige Körper (24, 25) umfasst, die zwischen dem Paar Vorderbeinen (11) und dem Paar Hinterbeinen (13) eingefügt sind, an einem Ende um eine fünfte Scharnierachse (H) aneinander angelenkt sind und an dem gegenüberliegenden Ende jeweils an dem Paar Vorderbeinen (11) oder an dem plattenartigen Körper (22) angelenkt sind, der an dem Paar Vorderbeinen und dem Paar Hinterbeinen (13) angelenkt ist, oder an dem plattenartigen Körper (23), der an dem Paar Hinterbeinen jeweils um eine sechste Scharnierachse (I) und eine siebte Scharnierachse (L) angelenkt ist, die jeweils koinzident oder parallel zu der dritten Scharnierachse (F) zu der vierten Scharnierachse (G) ist, wobei das Paar plattenartiger Körper (22, 23) und das Paar wellenartiger Körper (24, 25) ein Gelenkviereck bilden.

8. Rahmen (10) nach Anspruch 7, **dadurch gekennzeichnet, dass** einer der plattenartigen Körper (22, 23) oder der wellenartigen Körper (24, 25) an einem seiner Enden einen Fortsatz (26) aufweist, der, wenn der Rahmen sich in einem geschlossenen Zustand befindet, als Strebe zum Abstützen auf dem Boden dient.

9. Rahmen (10) nach einem oder mehreren der Ansprüche 2 bis 8, **dadurch gekennzeichnet, dass** er ein Paar rohrbogenförmiger Körper (27, 28) umfasst, jeweils einen vorderen rohrbogenförmigen Körper (27) und einen hinteren rohrbogenförmigen Körper (28), die die Stützkörper bilden und deren jeweilige Scharnierenden an dem Paar Vorderbeinen (11) und dem Paar Hinterbeinen (13) jeweils um eine zehnte Scharnierachse (M) und eine elfte Scharnierachse (N) parallel zu und getrennt von den jeweiligen Scharnierachsen angelenkt sind, wobei jeder der rohrbogenförmigen Körper (27, 28) einen oberen Rand eines jeweiligen Endes des faltenbalgartig zusammenklappbaren Korbes (29) definiert und zwischen einer angehobenen Position, in der er jeweils aus dem Paar Vorderbeinen (11) und aus dem Paar Hinterbeinen (13) auskragt, und einer abgesenkten Position beweglich ist, in der er jeweils nahe bei und im Wesentlichen koplanar zu dem Paar Vorderbeinen (11) oder dem Paar Hinterbeinen (13) ist, wobei der Boden (29a) des Korbes (29) auf dem Paar plattenartiger Körper (22, 23) aufliegt, wenn der Rahmen sich in seinem offenen Zustand befindet.

10. Rahmen (10) nach Anspruch 9, **dadurch gekennzeichnet, dass** der Korb (29) eine flexible Abdeckung umfasst, die die Wand und den Boden desselben definiert, und einen oberen umlaufenden Rand aufweist, der mit den rohrbogenförmigen Körpern (27, 28) gekoppelt ist.

11. Rahmen (10) nach Anspruch 10, **dadurch gekennzeichnet, dass** die Abdeckung Bodenabschnitte (29a) aufweist, die an dem Paar Vorderbeinen (11) und an dem Paar Hinterbeinen (13) nahe ihrem unteren Ende (11a, 13a) gekoppelt sind.

12. Rahmen (10) nach einem oder mehreren der vorstehenden Ansprüche, **dadurch gekennzeichnet, dass** das Paar Bewegungsachsen (15) mit dem Paar Vorderbeinen (11) mit einer Gleitbewegungskomponente in eine Richtung parallel zur Längsabwicklungsrichtung der Vorderbeine (11) beweglich gekoppelt ist und Folgendes umfasst:
- ein Paar Hebel (21), jeweils einen rechten und einen linken Hebel, die ein Ende (21a) aufweisen, das jeweils an der rechten Bewegungsachse (15) und der linken Bewegungsachse (15) um eine gemeinsame achte Scharnierachse (C) angelenkt ist, und das gegenüberliegende Ende (21b) jeweils an dem rechten Hinterbein (13) und dem linken Hinterbein (13) um eine gemeinsame neunte Scharnierachse (D) angelenkt ist.

13. Rahmen (10) nach einem oder mehreren der vorstehenden Ansprüche, **dadurch gekennzeichnet, dass** er Koppelglieder (30) zum abnehmbaren Koppeln mit einem Babyaufnahmeraum umfasst.

14. Rahmen (10) nach Anspruch 13, **dadurch gekennzeichnet, dass** die Koppelglieder wenigstens eines der Folgenden umfassen: eine Querstange (31), die sich zwischen den Hinterbeinen oder zwischen den Vorderbeinen nahe der ersten Scharnierachse (A) zum Koppeln mit Haken- oder Kupplungselementen erstreckt, die an dem Babyaufnahmeraum vorgesehen sind, an den Vorder- oder Hinterbeinen definierte Zapfen- oder Schlitzelemente (32) oder an dem Aufnahmeraum vorgesehene, ineinandergreifende Kupplungselemente, eine sich zwischen den Vorder- oder Hinterbeinen erstreckende und mit Kupplungselementen zur gegenseitigen Kopplung mit in dem Aufnahmeraum vorgesehenen komplementären Kupplungselementen versehene Stützplatte (33).

15. Kinderwagen umfassend einen Schubrahmen, mit dem ein Babyaufnahmeraum abnehmbar gekoppelt ist, **dadurch gekennzeichnet, dass** der Schubrahmen aus einem Rahmen (10) nach einem oder mehreren der vorstehenden Ansprüche besteht.

## Revendications

1. Cadre convertible (10) qui est pliable à la manière d'un livre et qui est utilisable comme châssis de poussée pour des poussettes de bébé comprenant :
- une paire de montants avant (11), respectivement un montant droit avant et un montant gauche avant qui sont parallèles l'un à l'autre, espacés latéralement et associés l'un à l'autre afin de constituer un corps unique et qui sont dotés d'au moins une roue avant (12) pour reposer sur le sol,
- une paire de montants arrière (13), respectivement un montant droit arrière et un montant gauche arrière lesquels sont parallèles l'un à l'autre, espacés latéralement et associés l'un à l'autre afin de constituer un corps unique et qui sont dotés d'au moins une roue arrière (14) pour reposer sur le sol, et
- une paire de tiges fonctionnelles (15), respectivement une tige fonctionnelle droite et une tige fonctionnelle gauche qui sont parallèles l'une à l'autre, espacées latéralement et associées l'une à l'autre afin de constituer un corps unique et qui sont dotées d'au moins une poignée (16),
- où ladite paire de montants arrière (13) et ladite paire de montants avant (11) sont articulés de manière rotative autour d'un premier axe charnière commun (A) ou autour d'un premier axe charnière distinct propre (A) défini dans un joint d'articulation, où ledit premier axe charnière (A) est parallèle au sol de support dudit cadre et orthogonal à la direction de déplacement (B) dudit cadre,
**caractérisé en ce qu'**il comprend
- une paire de corps de type plaques (22, 23) qui sont interposés entre ladite paire de montants avant (11) et ladite paire de montants arrière (13), sont articulés l'une à l'autre, à une extrémité, autour d'un deuxième axe charnière (E) et sont articulés, à l'extrémité opposée, à ladite paire de montants avant (11) et à ladite paire de montants arrière (13) respectivement autour d'un troisième axe charnière (F) et d'un quatrième axe charnière (G), où lesdits axes charnières sont parallèles les uns aux autres et distincts et où ledit cadre prend une configuration ouverte, dans laquelle ladite paire de montants avant (11) et ladite paire de montants arrière (13) sont espacées l'une de l'autre, lesdits corps de type plaques (22, 23) s'étendent entre elles et sont substantiellement coplanaires l'un à l'autre et lesdites tiges fonctionnelles (15) s'étendent vers le haut et vers l'arrière de ladite paire de montants avant (11), et une configuration fermée, dans laquelle ladite paire de montants avant (11), ladite paire de montants arrière (13) et ladite paire de tiges fonctionnelles (15) sont proches les unes des autres et se chevauchent au moins partiellement et lesdits corps de type plaques (22, 23) sont juxtaposés l'un à l'autre et se chevauchent au moins partiellement et sont interposés entre ladite paire de montants avant et ladite paire de montants arrière, où, lorsque ledit cadre (10) est dans ladite configuration ouverte, ladite paire de corps de type plaques (22, 23) agit comme un plan de support qui supporte le fond (29a) d'un panier pliable à la manière d'un soufflet (29) qui est interposé entre ladite paire de montants avant (11) et ladite paire de montants arrière (13) et dont le bord supérieur est associé à ladite paire de montants avant et à ladite paire de montants arrière.

2. Cadre (10) selon la revendication 1, **caractérisé en ce qu'**au moins une partie parmi la partie avant dudit bord supérieur et une partie arrière dudit bord supérieur est contrainte sur un corps de support respectif qui est articulé à ladite paire de montants avant (11) ou à ladite paire de montants arrière (13) respectivement de manière mobile entre une position relevée, dans laquelle elle fait saillie à partir de ladite paire de montants avant (11) ou à partir de ladite paire de montants arrière (13) respectivement, et une position abaissée, dans laquelle elle est proche et substantiellement coplanaire à ladite paire de montants avant (11) ou à ladite paire de montants arrière (13) respectivement.

3. Cadre (10) selon la revendication 1 ou la revendication 2, **caractérisé en ce que** la distance entre ledit deuxième axe charnière (E) et ledit troisième axe charnière (F) est différente de la distance entre ledit deuxième axe charnière (E) et ledit quatrième axe charnière (G).

4. Cadre (10) selon la revendication 3, **caractérisé en ce que** la distance entre ledit deuxième axe charnière (E) et ledit troisième axe charnière (F) est supérieure à la distance entre ledit deuxième axe charnière (E) et ledit quatrième axe charnière (G).

5. Cadre (10) selon une ou plusieurs des revendications précédentes, **caractérisé en ce que** lesdites extrémités opposées desdits corps de type plaques (22, 23) sont articulées à ladite paire de montants avant (11) et à ladite paire de montants arrière (13) respectivement à proximité de leur extrémité couplée à ladite au moins une roue avant (12) et à ladite au moins une roue arrière (13) respectivement.

6. Cadre (10) selon une ou plusieurs des revendications précédentes, **caractérisé en ce que** lesdites extrémités opposées desdits corps de type plaques (22, 23) sont articulées à ladite paire de montants avant (11) et à ladite paire de montants arrière (13) respectivement au niveau d'une pièce transversale de raccordement respective (17, 18) desdits deux montants avant (11) et desdits deux montants arrière (13).

7. Cadre (10) selon une ou plusieurs des revendications précédentes, **caractérisé en ce qu'**il comprend une paire de corps de type tiges (24, 25) qui sont interposés entre ladite paire de montants avant (11) et ladite paire de montants arrière (13), sont articulés l'un à l'autre, à une extrémité, autour d'un cinquième axe charnière (H) et sont articulés, à l'extrémité opposée, respectivement à ladite paire de montants avant (11), ou au corps de type plaque (22) articulé à ladite paire de montants avant et à ladite paire de montants arrière (13), ou au corps de type plaque (23) articulé à ladite paire de montants arrière, autour d'un sixième axe charnière (I) et d'un septième axe charnière (L), respectivement, coïncidant avec ledit ou parallèle audit troisième axe charnière (F) et audit quatrième axe charnière (G) respectivement, où ladite paire de corps de type plaques (22, 23) et ladite paire de corps de type tiges (24, 25) forment un quadrilatère articulé.

8. Cadre (10) selon la revendication 7, **caractérisé en ce que** l'un desdits corps de type plaques (22, 23) ou desdits corps de type tiges (24, 25) comprend à l'une de ses extrémités un appendice (26) qui, lorsque ledit cadre est dans une configuration fermée, agit comme une jambe de force pour reposer sur le sol.

9. Cadre (10) selon une ou plusieurs des revendications 2 à 8, **caractérisé en ce qu'**il comprend une paire de corps tubulaires arqués (27, 28), un corps tubulaire arqué avant (27) et un corps tubulaire arqué arrière (28) respectivement, lesquels constituent lesdits corps de support et ont leur charnières d'extrémité respectives articulées à ladite paire de montants avant (11) et à ladite paire de montants arrière (13) respectivement autour d'un dixième axe charnière (M) et d'un onzième axe charnière (N) parallèles auxdits, et distincts desdits, axes charnières respectivement, où chacun desdits corps tubulaires arqués (27, 28) définit le bord supérieur d'une extrémité respective dudit panier pliable à la manière d'un soufflet (29) et est mobile entre une position relevée, dans laquelle il fait saillie à partir de ladite paire de montants avant (11) et à partir de ladite paire de montants arrière (13) respectivement, et une position abaissée, dans laquelle il est proche et substantiellement coplanaire à ladite paire de montants avant (11) et à ladite paire de montants arrière (13) respectivement, où le fond (29a) dudit panier (29) repose sur ladite paire de corps de type plaques (22, 23) lorsque ledit cadre est dans sa configuration ouverte.

10. Cadre (10) selon la revendication 9, **caractérisé en ce que** ledit panier (29) comprend une couverture souple qui définit les parois et le fond de celui-ci et qui présente un bord périphérique supérieur couplé auxdits corps tubulaires arqués (27, 28).

11. Cadre (10) selon la revendication 10, **caractérisé en ce que** ladite couverture présente des parties basses (29a) couplées à ladite paire de montants avant (11) et à ladite paire de montants arrière (13) près de leur extrémité inférieure (11a, 13a) .

12. Cadre (10) selon une ou plusieurs des revendications précédentes, **caractérisé en ce que** ladite paire de tiges fonctionnelles (15) est couplée à ladite paire de montants avant (11) de manière mobile avec un composant de mouvement coulissant dans une direction parallèle à la direction de développement longitudinal desdits montants avant (11), et **en ce qu'**il comprend
- une paire de leviers (21), un levier droit et un levier gauche respectivement, lesquels ont une extrémité (21a) en charnière sur la tige fonctionnelle droite (15) et la tige fonctionnelle gauche (15) respectives autour d'un huitième axe charnière commun (C) et l'extrémité opposée (21b) en charnière sur le montant arrière droit (13) et le montant arrière gauche (13) respectifs autour d'un neuvième axe charnière commun (D).

13. Cadre (10) selon une ou plusieurs des revendications précédentes, **caractérisé en ce qu'**il comprend des organes de couplage (30) pour le couplage amovible avec un compartiment destiné à contenir un bébé.

14. Cadre (10) selon la revendication 13, **caractérisé en ce que** lesdits organes de couplage comprennent au moins un élément parmi : une barre transversale (31) qui s'étend entre lesdits montants arrière ou entre lesdits montants avant près dudit premier axe charnière (A) pour un couplage avec des éléments d'accrochage ou de couplage prévus sur ledit compartiment, des éléments femelles ou mâles (32) définis au niveau desdits montants avant ou arrière pour un couplage par emboîtement ou par interverrouillage avec des éléments mâles ou femelles correspondants prévus sur ledit compartiment, une plaque de support (33) qui s'étend entre lesdits montants avant ou arrière et qui est dotée d'éléments de couplage pour un couplage mutuel avec des éléments de couplage complémentaires prévus sur ledit compartiment.

15. Poussette de bébé comprenant un châssis de poussée auquel un compartiment pour bébé est couplé de manière amovible, **caractérisée en ce que** ledit châssis de poussée consiste en un cadre (10) selon une ou plusieurs des revendications précédentes.
